# EUROPÄISCHE PATENTANMELDUNG

(11) **EP 0 848 172 A1**
(43) Veröffentlichungstag der Anmeldung: **17.06.1998**
(21) Anmeldenummer: 97121729.4
(22) Anmeldetag: 10.12.1997
(51) Int. Cl.: F16B 23/00

(54) **Sicherheits-Befestigungseinrichtung sowie Werkzeug zum Verdrehen derselben**

(30) Priorität: 11.12.1996 DE 29621364 U; 24.04.1997 US 847378; 02.05.1997 US 850830
(71) Anmelder: McGard Deutschland GmbH, 74223 Flein (DE)
(72) Erfinder: Bainbridge, Gary R., North Tonawanda New York 14120 (US); Sullivan, Jeffery R., Boston, New York 14025 (US)
(74) Vertreter: Müller, Hans, Dipl.-Ing.

(57) **Zusammenfassung**

Eine Sicherheits-Befestigungseinrichtung (10) verfügt über einen Körper (14) mit einer Mantelfläche (15) und einer Stirnwand (16), mehrere in Umfangsrichtung beabstandete Vertiefungen (17), die sich nach innen in die Mantelfläche (15) ausgehend von der Stirnwand (16) erstrecken und eine Bodenwand (20) und eine erste und eine zweite Seitenwand (22, 23) aufweisen, und Übergänge mit Radien zwischen der Bodenwand und den Seitenwänden. Eine der Seitenwände (22) erstreckt sich unter einem größeren Winkel zur Achse (31) der Befestigungseinrichtung als die andere Seitenwand (23), an der ein Werkzeug (34) zum Verdrehen angreift. Ein Werkzeug (34) zum Verdrehen sowohl dieser Sicherheits-Befestigungseinrichtung (10) als auch einer herkömmlichen Sechskant-Befestigungseinrichtung (49) verfügt über einen Körper (35) mit einer Bohrung (37) mit mehreren sich axial erstreckenden Stegen (40) zum Angreifen an der oben genannten Seitenwand (23) der Vertiefung (17) der Sicherheits-Befestigungseinrichtung (10) und an mehreren Seiten (52) der Sechskant-Befestigungseinrichtung (49).

## Beschreibung

### TECHNISCHES GEBIET

Die Erfindung betrifft Sicherheits-Befestigungseinrichtungen sowie ein Werkzeug zum Verdrehen derselben. Sicherheits-Befestigungseinrichtungen betreffen ein eine Schraube oder Mutter beinhaltendes Schraubteil sowie ein dem Schraubteil angepaßtes Werkzeug in Form einer Drehhilfe. Aufgrund der besonderen Ausbildung der Schraube oder der Mutter können dieselben nur durch ein an sie individuell angepaßtes Werkzeug von ihrem Gegenstück losgeschraubt werden. Dadurch ist ein zerstörungs- beziehungsweise beschädigungsfreies Lösen der durch ein solches Schraubteil gebildeten Sicherheits-Befestigungseinrichtung nur mit dem jeweils passenden Werkzeug möglich.

In der Automobilindustrie werden derartige Sicherheits-Befestigungseinrichtungen beim Befestigen der Räder eines Autos verwendet. Von den Befestigungs-Schrauben oder -Muttern eines Rades sind regelmäßig nur eine Schraube beziehungsweise eine Mutter Teil einer entsprechenden Sicherheits-Befestigungseinrichtung. Die anderen Schrauben oder Muttern dieses betreffenden Rades werden über im Stand der Technik bekannte, übliche Schrauben und Muttern befestigt. Bei der Erstmontage eines Rades müssen also sowohl der Sicherheits-Befestigungseinrichtung entsprechende Werkzeuge als auch "normale" Werkzeuge, die für üblicherweise verwendete Schraubteile verwendet werden, jeweils benutzt werden.

### Stand der Technik

Es sind verschiedene Arten von Sicherheits-Befestigungseinrichtungen bekannt. Bestimmte dieser Arten, wie diejenige, die im Dokument US-A-4,712,586 angegeben ist, können durch ein spezielles Werkzeug in eine Befestigungsposition angetrieben werden, jedoch kann dieses Werkzeug nicht dazu verwendet werden, herkömmliche Sicherheits-Befestigungseinrichtungen, wie solche mit einem Sechskant, zu verdrehen. Ferner existieren Werkzeuge, wie das im Dokument US-A-5,127,289 angegebene, die sowohl herkömmliche Sechskant-Sicherheits-Befestigungseinrichtungen als auch Sicherheits-Befestigungseinrichtungen verdrehen können. Jedoch benötigt diese Art von Werkzeug zwei gesonderte Strukturen zum Verdrehen einer Sicherheits-Befestigungseinrichtung beziehungsweise einer Sechseck-Befestigungseinrichtung. Insoweit es bekannt ist, existieren keine Konfigurationen von Sicherheits-Befestigungseinrichtungen und Werkzeugen, bei denen dieselbe Struktur des Werkzeugs zum Verdrehen einer Sicherheits-Befestigungseinrichtung in eine Befestigungsposition und auch zum Verdrehen einer herkömmlichen Sechskant-Sicherheits-Befestigungseinrichtung verwendet werden kann.

Ausgehend von diesem vorbekannten Stand der Technik liegt der Erfindung die Aufgabe zugrunde, eine montagefreundlichere Sicherheits-Befestigungseinrichtung anzugeben.

Diese Erfindung ist für die erfindungsgemäße Sicherheits-Befestigungseinrichtung durch die Merkmale des Anspruchs 1 und für ein dieser Sicherheits-Befestigungseinrichtung angepaßtes erfindungsgemäßes Werkzeug durch die Merkmale des Anspruchs 13 gegeben.

Die erfindungsgemäße Sicherheits-Befestigungseinrichtung zeichnet sich, ausgehend von dem vorstehenden Stand der Technik, dementsprechend dadurch aus, daß in seiner Mantelfläche zumindest eine zusätzliche Anlagefläche vorhanden ist, die nur zum Einschrauben der Sicherheits-Befestigungseinrichtung verwendet werden kann. Zum Einschrauben des entsprechenden Schraubteils muß daher also nicht das der Schlüsselaufnahme-Konfiguration in der Stirnfläche des entsprechenden Schraubteils angepaßte spezielle Werkzeug verwendet werden. Bei der Montage eines Rades beziehungsweise dessen Felge an einem Fahrzeug braucht der Monteuer beziehungsweise der die Montage ausführende Automat nicht mehr dieses spezielle Werkzeug zu verwenden. Ein möglicher Mißbrauch wird dadurch verhindert. Es können die individuellen, dem Schließsystem angepaßten Werkzeuge unmittelbar dem jeweiligen Käufer des Fahrzeuges ausgehändigt werden. Eine Benutzung dieser speziellen Werkzeuge in den Montagewerkstätten von Automobilwerken ist nicht mehr erforderlich.

Die in der Befestigungseinrichtung, dem Schraubteil, vorhandene, dem jeweiligen Sicherheitsschließsystem angepaßte Schlüsselaufnahme-Konfiguration kann, wie bereits ausgeführt, unterschiedlich sein. Sie kann beispielsweise auch aus der in dem eingangs genannten Stand der Technik bekannten, in der Stirnwand der Schraube oder Mutter umfangsmäßig als zumindest bereichsweise umlaufende mäanderförmige oder krummlinige Nut beziehungsweise Rille bestehen.

Die in der Mantelfläche des Schraubteils zusätzlich angebrachten Anlageflächen können nach einer wesentlichen Ausführungsform der Erfindung aus zumindest einer Vertiefung bestehen. Diese Vertiefung besitzt zumindest einen für ein Dreh-Werkzeug in Einschraub-Richtung abrutschsicheren Anschlag, so daß durch das Werkzeug ein Drehmoment auf das Schraubteil in Einschraub-Richtung übertragbar ist. Die Vertiefung ist für das Werkzeug in Ausschraub-Richtung dagegen so geformt, daß durch dieses Werkzeug kein wirksames Drehmoment auf das Schraubteil übertragen werden kann. Das Ausschrauben dieses Schraubteils und damit das Lösen beispielsweise des Rades von einer Fahrzeugwelle ist mit diesem Werkzeug nicht möglich. Zum Lösen des Schraubteils kann also nur das der speziellen Schlüsselaufnahme-Konfiguration in der Stirnwand des Schraubteils angepaßte spezielle Werkzeug benutzt werden.

Nach einer auch in der Zeichnung näher dargestellten Ausführungsform besitzt die in der Mantelfläche vorhandene Vertiefung die Grundfläche eines etwa rechtwinkligen Dreiecks. Die eine Kathete dieses Dreiecks begrenzt die Anschlagsfläche in Einschraub-Richtung, während die andere Kathete dieses rechtwinkligen Dreiecks in der Stirnwand liegt. Die dritte Dreieckseite, die Hypotenuse, führt dann schräg auf der Mantelfläche in Richtung der Stirnwand zurück, so daß beim Ansetzen des Dreh-Werkzeugs längs dieser Hypotenuse das Werkzeug rückwärts aus der Sicherheits-Befestigungseinrichtung zurückgleitet und kein Lösen der Sicherheits-Befestigungseinrichtung bewirken kann.

Das der erfindungsgemäßen Sicherheits-Befestigungseinrichtung angepaßte Werkzeug besitzt zumindest eine erste Art von Anschlaggegenflächen, die der in der Mantelfläche vorhandenen zumindest einen Vertiefung so angepaßt sind, daß ein Drehmoment in Einschraub-Richtung auf die Sicherheits-Befestigungseinrichtung übertragbar ist.

Als weiteren Vorteil hat sich herausgestellt, dieses Dreh-Werkzeug mit einer zweiten Art von Anschlagflächen auszustatten. Diese zweiten Anschlagflächen sind dann längs der Drehachse der Drehhilfe versetzt zu der ersten Art von Anschlagflächen vorhanden. Diese zweiten Anschlagflächen können bei allgemein bekannten Sicherheits-Befestigungseinrichtungen zur Drehmomentübertragung verwendet werden. Mit derselben Drehhilfe können dann einerseits die erfindungsgemäß vorgesehenen, vorstehend beschriebenen Sicherheits-Befestigungseinrichtungen lediglich eingeschraubt werden, andererseits können mit dieser Drehhilfe auch im Stand der Technik bekannte, übliche Schraubteile geschraubt werden. Dies erleichtert die Erstmontage von beispielsweise mit einer Sicherheitsschraube zu befestigenden Rädern ganz erheblich, da nur ein einziges Werkzeug verwendet zu werden braucht. Eventuelle Umrüstarbeiten an dem Werkzeug sind nämlich entbehrlich.

Diese anderen Schraubteile können beispielsweise "normale" Schraubteile sein, so wie sie üblicherweise zum Befestigen von Rädern beziehungsweise Felgen an Fahrzeugen verwendet werden. Diese Schraubteile sind nicht Teil eines Sicherheitsschließsystems. Die Mantelflächen dieser Schraubteile können aus beispielsweise sechs umfangsmäßig zusammengesetzten, ebenen Flächen bestehen. Entsprechend sind dann auch die Anschlaggegenflächen der Werkzeuge ebenfalls aus sechs ebenen Flächen umfangsmäßig angeordnet. Auf diese Weise können dann mit diesen Werkzeugen derartige "normale" Drehteile sowohl in die eine wie in die andere Drehrichtung gedreht werden. Mit diesem Werkzeug können dagegen Schraubteile, die Teil eines Sicherheitsschließsystems sind, lediglich in Einschraub-Richtung verdreht werden.

Nach einer wesentlichen Ausführungsform der Erfindung, die ausführlich beispielhaft nachstehend erläutert und zeichnerisch dargestellt ist, können spezielle Anschlaggegenflächen so in dem Dreh-Werkzeug angeordnet sein, daß sie einerseits in die Schlüsselaufnahme-Vertiefungen eingreifen können und dadurch ein Drehmoment nur in Einschraub-Richtung übertragen können. Andererseits kann durch diese Anschlaggegenflächen auch eine gängige, bekannte beispielsweise Sechseck-Schraube oder -Mutter festgeschraubt oder losgeschraubt werden. Als beispielsweise Stege ausgebildete Anschlaggegenflächen können dann einerseits in die Vertiefungen eintauchen und andererseits sich an den Außenseiten herkömmlicher, im Querschnitt mehrseitiger Schrauben oder Muttern anlegen.

Weitere Ausgestaltungen und Vorteile der Erfindung sind den in den Ansprüchen weiterhin aufgeführten Merkmalen sowie den nachfolgenden Ausführungsbeispielen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert.
- Fig. 1: ist eine Seitenansicht einer Sicherheits-Befestigungseinrichtung vom Schraubentyp mit einem Kopf mit der erfindungsgemäßen verbesserten Sicherheitskonstruktion;
- Fig. 2: ist eine Stirnansicht im wesentlichen in der Richtung der Pfeile 2-2 in Fig. 1;
- Fig. 3: ist eine vergrößerte Teilseitenansicht des Kopfteils in Fig. 1;
- Fig. 4: ist eine vergrößerte Schnittansicht im wesentlichen entlang der Linie 4-4 in Fig. 3, und sie zeigt die Konfiguration einer der Seitenwände einer Vertiefung;
- Fig. 5: ist eine Teilschnittansicht im wesentlichen entlang der Linie 5-5 in Fig. 3, und sie zeigt die Konfiguration der anderen der Seitenwände der Vertiefung;
- Fig. 6: ist eine Seitenansicht einer herkömmlichen Schraube mit Sechseckkopf;
- Fig. 7: ist eine teilausgebrochene Seitenansicht, die ein Werkzeug zum Verdrehen sowohl der Sicherheitsschraube gemäß den Figuren 1 bis 5 als auch der herkömmlichen Sechseckschraube von Fig. 6 zeigt;
- Fig. 8: ist eine Stirnansicht des Werkzeugs von Fig. 7 im wesentlichen in der Richtung der Pfeile 8-8 in Fig. 7;
- Fig. 9: ist eine vergrößerte Teilschnittansicht im wesentlichen entlang der Linie 9-9 in Fig. 8;
- Fig. 10: ist eine Schnittansicht im wesentlichen entlang der Linie 10-10 in Fig. 7, jedoch zeigt sie das Verdrehwerkzeug in Eingriff mit dem Sicherheitskopf der Schraube von Fig. 1 zum Anziehen der Schraube;
- Fig. 11: ist eine Schnittansicht im wesentlichen entlang der Linie 10-10 in Fig. 7, und sie zeigt das Verdrehwerkzeug in Eingriff mit dem Sechseckkopf der bekannten Schraube von Fig. 6 zum Anziehen dieser Schraube;
- Fig. 12: ist eine schematische Teilseitenansicht, die den Außenverlauf eines Fräsers zeigt, der dazu verwendet wird, die Vertiefungen im Sicherheitskopf der Schraube der Figuren 1 bis 5 herzustellen;
- Fig. 13: ist eine schematische Schnittansicht im wesentlichen entlang der Linie 13-13 in Fig. 12, und sie zeigt den Querschnitt des Fräsers;
- Fig. 14: ist eine teilweise ausgebrochene Seitenansicht, die eine Befestigungseinrichtung in Art einer Mutter mit der verbesserten Sicherheitsstruktur gemäß der Erfindung zeigt;
- Fig. 15: ist eine Stirnansicht im wesentlichen in der Richtung der Pfeile 15-15 in Fig. 14;
- Fig. 16: ist eine teilweise ausgebrochene Seitenansicht einer anderen Art einer Befestigungseinrichtung in Form einer Mutter mit dem erfindungsgemäßen Sicherheitsaufbau;
- Fig. 17: ist eine Stirnansicht im wesentlichen in der Richtung von Pfeilen 17-17 in Fig. 16;
- Fig. 18: ist eine vergrößerte Teilansicht eines Teils von Fig. 16;
- Fig. 19: ist eine vergrößerte Teilschnittansicht im wesentlichen entlang der Linie 19-19 in Fig. 18;
- Fig. 20: ist eine vergrößerte Teilschnittansicht im wesentlichen entlang der Linie 20-20 in Fig. 18;
- Fig. 21: ist eine verkleinerte Seitenansicht eines Schlüssels, wie er dazu verwendet wird, eines der Ausführungsbeispiele erfindungsgemäßer Befestigungseinrichtungen zu verdrehen;
- Fig. 22: ist eine Seitenansicht eines Rads mit einer Felge, die durch mehrere herkömmliche Schrauben und eine erfindungsgemäße Sicherheitsschraube montiert ist;
- Fig. 23: ist eine perspektivische Ansicht einer Sicherheits-Befestigungseinrichtung vom Schraubtyp ähnlich Fig. 1 nach der Erfindung und
- Fig. 24: ist ein sowohl für erfindungsgemäße Schraubteile als auch für sonstige, handelsübliche bekannte Schraubteile zu verwendendes Werkzeug nach der Erfindung.

### WEGE ZUM AUSFÜHREN DER ERFINDUNG

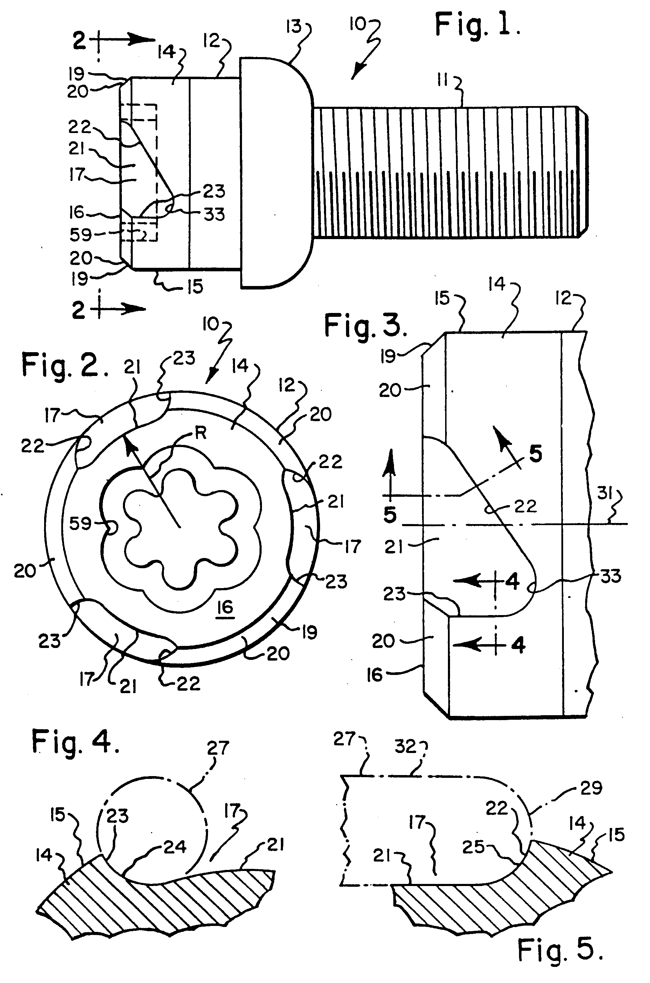

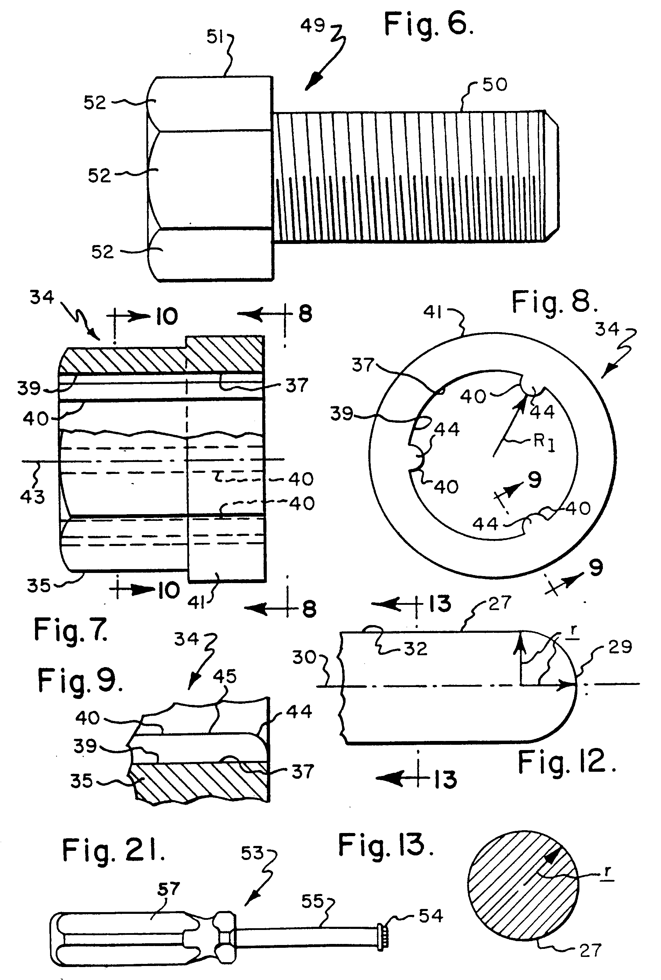

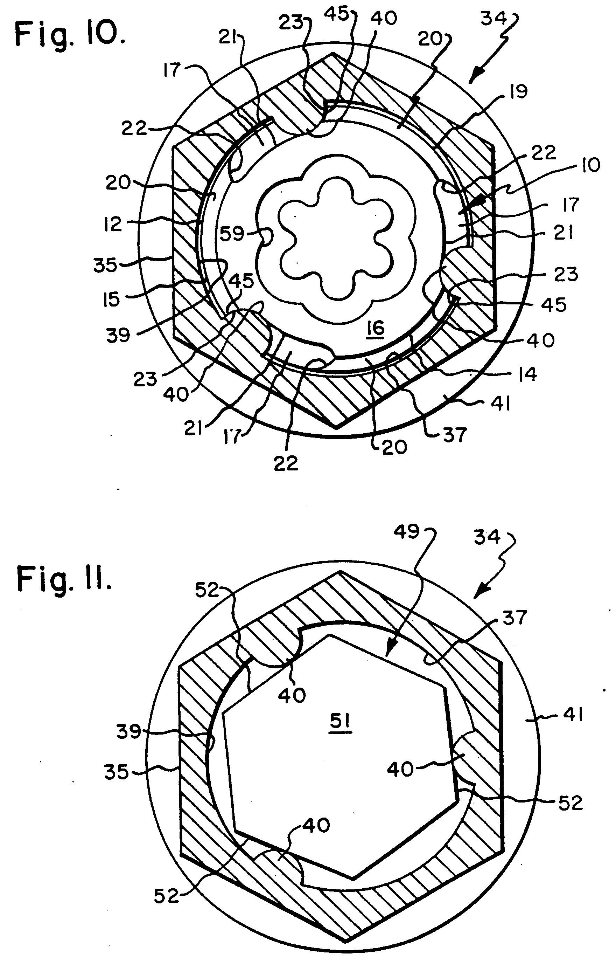

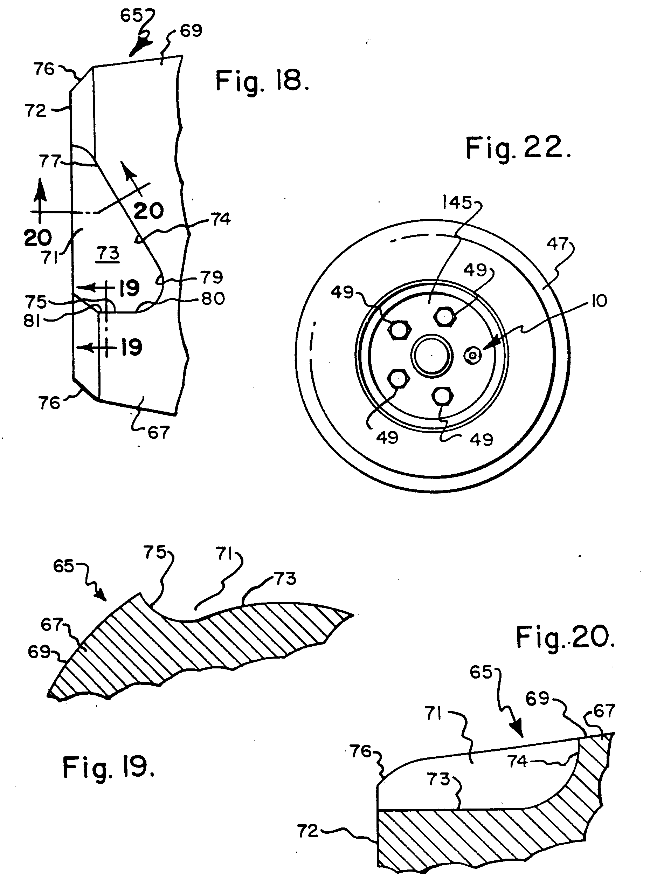

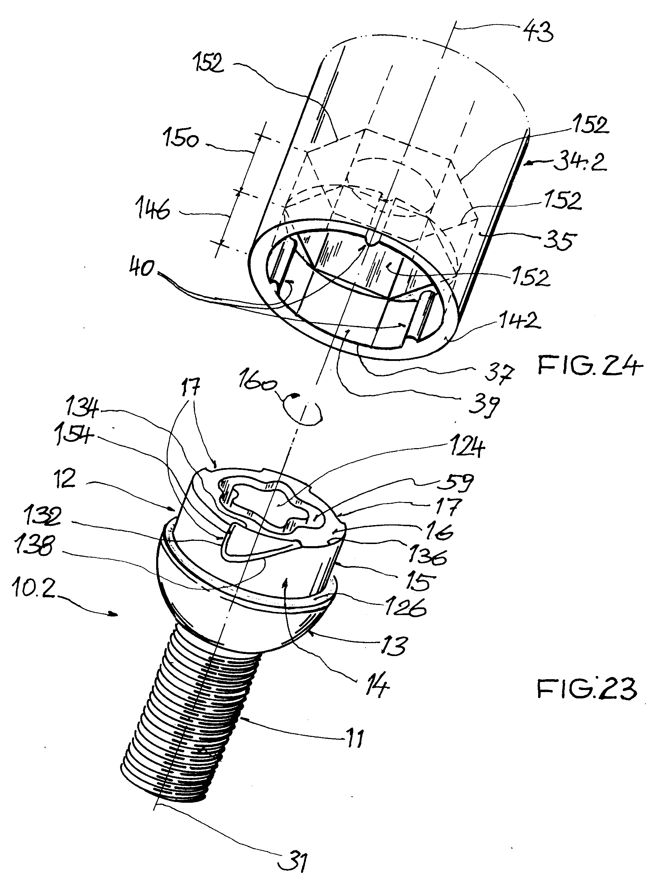

Vorab sei kurz gefasst angegeben, daß die verbesserten Sicherheits-Befestigungseinrichtungen der Figuren 1 bis 5, 14 bis 19 und 23 und der herkömmliche Typ einer Sechskant-Befestigungseinrichtung von Fig. 6 unter Verwendung derselben Art von Werkzeug, wie in den Figuren 7 bis 9 und 24 dargestellt, montiert werden können, und dies ist bei Montagen wie der in Fig. 22 von großem Nutzen, bei der ein Rad durch mehrere herkömmliche Schrauben des in Fig. 6 dargestellten Typs und eine Sicherheitsschraube vom in den Figuren 1 und 23 dargestellten Typ an einer Felge montiert wird, wodurch das Erfordernis beseitigt ist, daß gesonderte Werkzeuge dazu erforderlich sind, die beiden Typen von Befestigungseinrichtungen zu montieren.

Der verbesserte Typ einer Sicherheitsschraube 10 gemäß den Figuren 1 bis 5 umfasst einen Gewindeschaft 11 und einen Sicherheitskopf 12 mit vergrößertem ringförmigem Bund 13 dazwischen. Der Sicherheitskopf 12 umfasst einen Körper 14 mit einer Stirnwand 16 und einer Mantelfläche 15 mit mehreren voneinander beabstandeten Schlüsselaufnahmevertiefungen 17. Die Kante 19 des Körpers 14 weist zwischen der Stirnwand 16 und der Mantelfläche 15 eine Fase 20 auf. Fasen liegen auch zwischen den Vertiefungen 17.

Die Schlüsselaufnahmevertiefungen 17 erstrecken sich von der Stirnwand 16 aus nach innen in den Körper 14, und sie weisen eine Bodenwand 21 und Seitenwände 22 und 23 auf. Die Vertiefungen 17 verfügen über ihren gesamten Umfang über im wesentlichen gleichmäßige Tiefe, und die Bodenwand 21 ist an einem Radius R (Fig. 2) ausgebildet, der mit der Gleichmäßigkeit der Tiefe jeder der Vertiefungen 17 übereinstimmt. Der Übergang von der Bodenwand 21 zur Wand 23 verfügt über einen Radius, wie bei 24 (Fig. 4) dargestellt, und der Übergang zwischen der Seitenwand 22 und der Bodenwand 21 verfügt über einen Radius bei 25 (Fig. 5). Es existiert auch ein Radius am Übergang 33 (Fig. 3) zwischen den Seitenwänden 22 und 23. Die Radien an den Übergängen 24, 25 und 33 beseitigen Spannungspunkte, wie sie andernfalls vorhanden sein könnten, wenn diese Übergänge scharf wären.

Die Schlüsselaufnahmevertiefungen 17 werden durch einen Fräser 27 hergestellt, wie schematisch in den Figuren 4, 5, 12 und 13 dargestellt, der einen Radius R und ein kugeliges Ende 29 mit ebenfalls dem Radius R aufweist. Der Fräser 27 bildet jede Vertiefung 17 dadurch aus, daß er in axialer Richtung so in den Körper 14 eingeführt wird, daß sich seine Achse 30 parallel zur Längsachse 31 (Fig. 3) des Körpers 14 und des Sicherheitskopfs 12 erstreckt, die auch die Längsachse der Schraube 10 ist. Wie es in der Technik wohlbekannt ist, wird der Fräser 27 so in den Körper 14 vorgeschoben, daß er eine Vertiefung 17 mit der in den Figuren 2 bis 5 dargestellten Konfiguration erzeugt. Der Fräser 27 erzeugt von sich aus die Radien 24 und 25. Diesbezüglich wird der Radius bei 24 durch die Längskante 32 des Fräsers 27 erzeugt, während der Radius 25 in erster Linie durch das kugelförmige Ende 29 des Fräsers 27 erzeugt wird. Zusätzlich zu den Radien bei 24 und 25 existiert, wie oben angegeben, am Übergang zwischen den Seitenwänden 22 und 23 bei 33 (Fig. 3) ein Radius. Der Radius r des Fräsers 27 ist vorzugsweise geringfügig größer als die Tiefe der Vertiefungen 17.

Beispielsweise betrug bei einer hergestellten Sicherheitsschraube 10 der Radius R 8,53 mm und die Tiefe der Vertiefungen 17 betrug 1,38 mm, wobei diese eine Umfangslänge von ungefähr 60° aufwiesen und um ungefähr 60° voneinander beabstandet waren. Nuten erstreckten sich axial in den Umfangsrand hinein, mit ungefähr 4,95 mm am maximalen Punkt, das heißt zum Übergang 33 (Fig. 3) hin. Der Radius des Fräsers 27 betrug 1,59 mm. Auch waren die Seitenwände 22 und 23 unter im wesentlichen den in Fig. 3 dargestellten Winkeln gegen die Stirnwand 16 geneigt. Diesbezüglich ist die Seitenwand 22 unter ungefähr 25° gegen die Stirnwand 16 geneigt, während die Seitenwand 16 im wesentlichen rechtwinklig zur Stirnwand 16 steht. Es ist zu beachten, daß andere geeignete Abmessungen verwendet werden können.

Die Schraube 10 wird unter Verwendung eines Werkzeugs 34 mit einem Körper 35 mit einer Bohrung 37 mit einer Innenwand 39 mit einer Anzahl sich in Längsrichtung erstreckender Stege 40, die nach innen von dieser vorspringen, in Einschraubrichtung gedreht und dadurch montiert. Ein Ende des Körpers 35 ist als ringförmiger Bund 41 ausgebildet, und der Rest des Körpers 35 verfügt über eine Außenkonfiguration in Sechseckform, um in einer passenden Aussparung einer geeigneten Antriebseinrichtung zum Verdrehen des Werkzeugs 34 angebracht zu werden.

Um die Sicherheitsschraube 10 in eine Montageposition zu verdrehen, ist es lediglich erforderlich, das Werkzeug 34 axial so vorwärts zu bewegen, daß seine Achse 43 mit der Längsachse 31 des Sicherheitskopfs 12 ausgerichtet ist. Die gekrümmten Enden 44 (Fig. 9) der Stege 40 treten entweder in die Vertiefungen 17 ein oder stoßen an den Fasen 20 an. Wenn das letztere der Fall ist, werden sie relativ zu diesen verdreht, bis sie in die Vertiefungen 17 eintreten. Wenn dies der Fall ist, laufen sie nach innen, bis die gekrümmten Enden 44 der Stege in die Seitenwände 22 der Vertiefungen 17 eingreifen. Es ist zu beachten, daß die Krümmung 44 an den Enden der Stege 44 näherungsweise der Krümmung der Seitenwände 22 entspricht, und sie laufen axial an den Seitenwänden entlang, bis sie die Übergänge 33 erreichen. Die Krümmung der Wände der Stege bei 45 hat im wesentlichen denselben Radius wie die der Wände 23, so daß sie an den Wänden 23, die als Schulter wirken, in im wesentlichen komplementär passender Beziehung anliegen, um dadurch die Schraube 10 in eine Sperrposition anzutreiben.

Nachdem die Schraube 10 vollständig montiert wurde, wird das Werkzeug 34 axial abgezogen. Die Antriebsbeziehung zwischen dem Werkzeug 34 und dem Sicherheitskopf 12 der Schraube 10 ist in Fig. 10 dargestellt, gemäß der die Seiten 45 der Stege 40 mit den Seitenwänden 23 der Vertiefungen 17 in Eingriff stehen. Es ist auch zu beachten, daß der Radius R₁ (Fig. 8) von der Achse 43 des Werkzeugs 34 zur innersten Kante jedes Stegs 40 nur geringfügig größer als der Radius R der Bodenwand 21 jeder Vertiefung 17 ist, so daß die Stege 40 entlang der Bodenwand 21 laufen, bis sie mit den Seitenwänden 23 der Vertiefungen 17 in Eingriff treten. So kann das Werkzeug 34 die Sicherheitsschraube 10 in die Felge 145 (Fig. 22) eindrehen, an der ein Reifen 47 montiert ist.

Wie oben kurz angegeben, wird das Werkzeug 34 auch dazu verwendet, herkömmliche Schrauben 49 (Fig. 6) zu verdrehen, die aus einem Gewindeschaft 50 mit einem herkömmlichen Sechskantkopf 51 am Ende bestehen. Um die Schraube 49 in eine Montageposition zu verdrehen, ist es lediglich erforderlich, den Sechseckkopf 51 in die Bohrung 37 des Werkzeugs 34 so einzuführen, daß die Stege 40 in antreibender Beziehung an den Seiten 52 des Sechseckkopfs 51 angreifen, wie es in Fig. 11 dargestellt ist. Es ist ersichtlich, daß während des Anbringens des Werkzeugs 34 am Kopf 51 ausreichende Toleranz zwischen den Seiten 52 und den Stegen 40 besteht.

So ist es ersichtlich, daß dasselbe Werkzeug 34 zweckdienlicherweise dazu verwendet werden kann, sowohl eine Sicherheitsschraube 10 als auch mehrere herkömmliche Sechskantschrauben 49 in eine Felge 145 einzuschrauben, wie in Fig. 22 dargestellt.

Um eine Sicherheitsschraube 10 von einer Montageposition zu entfernen, wird ein Schlüssel 53 verwendet, der am Ende eines an einem Griff 57 befestigten Schafts 55 einen krummlinigen Wulst 54 aufweist. Dieser krummlinige Wulst 54 hat komplementär passende Form zur krummlinigen Nut 59 in der Stirnwand 16 des Körpers 14. Schlüssel wie der Schlüssel 53 zur Verwendung mit krummlinigen Nuten, wie der Nut 59, sind wohlbekannt und in der Technik üblich, wie dies auch für krummlinige Nuten gilt. Die krummlinige Nut 59 ist der bevorzugte Typ einer Schlüsselaufnahme-Konfiguration, wie sie bei der vorliegenden Struktur verwendet wird.

Jedoch ist zu beachten, daß andere Typen von Schlüsselaufnahme-Konfigurationen bei erfindungsgemäßen Sicherheits-Befestigungseinrichtungen vorhanden sein können.

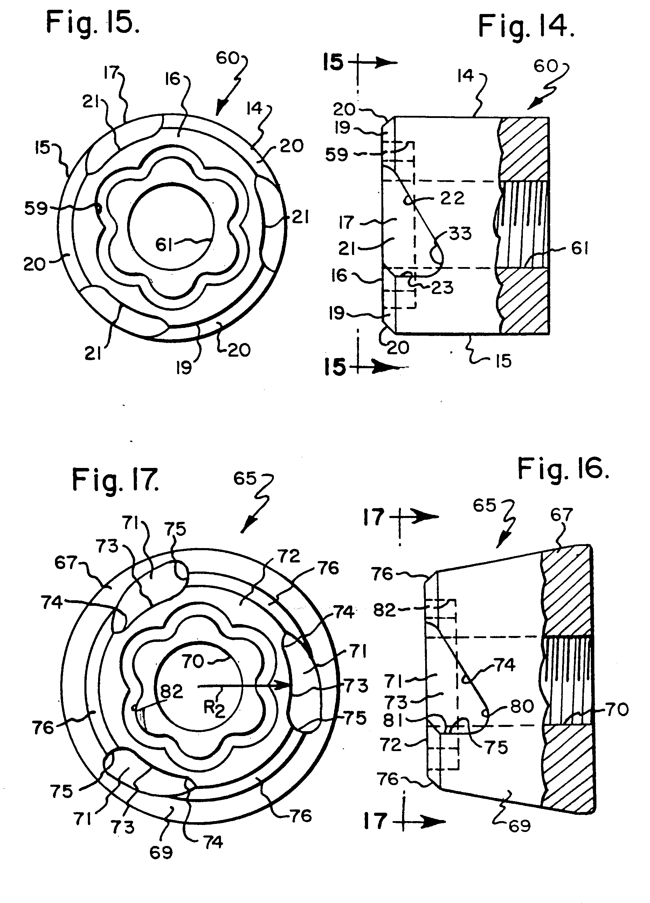

Während die Sicherheits-Befestigungseinrichtung 10 der Figuren 1, 2 und 5 in Art einer Schraube vorliegt, ist es zu beachten, daß die Sicherheits-Befestigungseinrichtung auch in Art einer Mutter 60 (Fig. 14 und 15) vorliegen kann, die sich von der Sicherheits-Befestigungseinrichtung 10 von Fig. 1 nur dadurch unterscheidet, daß sie statt eines Gewindeschafts 11 eine Gewinde-Innenbohrung 61 aufweist. Demgemäß gelten dieselben Bezugszahlen für den Körper 14 der Mutter 60, wie sie beim Körper 14 der Schraube 10 angewandt waren, und es wird davon ausgegangen, daß eine Beschreibung dieser Teile der Struktur überflüssig ist, insoweit sie oben unter Bezugnahme auf die Figuren 1 bis 5 vollständig beschrieben sind.

In den Figuren 16 bis 20 ist ein anderes Ausführungsbeispiel einer Sicherheits-Befestigungseinrichtung 65 offenbart, die einen Körper 67 mit einer Mantelfläche 69 in Kegelstumpfform aufweist. Diese Sicherheits-Befestigungseinrichtung 65 liegt in Art einer Mutter mit einer Innengewindebohrung 70 vor. Jedoch ist es ersichtlich, daß diese Art von SicherheitsBefestigungseinrichtung in Form einer Schraube vorliegen kann, was allerdings nicht dargestellt ist, wenn die Gewindebohrung 70 durch einen Gewindeschaft ersetzt wäre, wie es in Fig. 1 dargestellt ist. Die Mantelfläche 69 verfügt über mehrere Vertiefungen 71. Diese Vertiefungen 71 erstrecken sich von der Stirnwand 72 ausgehend nach innen in den Körper 67, und sie werden auf dieselbe Weise wie die Vertiefungen 17 in den Figuren 1 und 15 hergestellt, nämlich durch Einführen eines Fräsers in die Stirnwand 72, wobei die Achse des Fräsers im wesentlichen parallel zur Längsachse der Befestigungseinrichtung verläuft, wie dies oben unter Bezugnahme auf das Ausführungsbeispiel der Figuren 1 bis 5 beschrieben wurde. Zwischen der Stirnwand 72 und der Mantelfläche 69 liegen Fasen 76, wie sie auch zwischen den Vertiefungen 71 liegen. Jede dieser Vertiefungen verfügt über eine Bodenwand 73, die an einem Radius R₂ (Fig. 17) ausgebildet ist. Die Bodenwand 73 wird von Seitenwänden 74 und 75 begrenzt. Wie es aus Fig. 17 erkennbar ist, hat die Seitenwand 74 keine gleichmäßige Höhe. Genauer gesagt, ist, wegen der Kegelstumpfkonfiguration der Mantelfläche 69, der Endabschnitt 77 (Fig. 18) der Stirnwand 74 weniger hoch als der Endabschnitt 79. Auch ist der Abschnitt 80 der Stirnwand 75 höher als der Abschnitt 81, der näher an der Stirnwand 72 liegt.

Während es bevorzugt ist, die Mutter 65 durch ein Werkzeug zu verdrehen, das in komplementär passende Beziehung zu den Wänden der Vertiefungen 71 steht, kann auch ein Werkzeug verwendet werden, wie es unter Bezugnahme auf die Figuren 7 bis 9 beschrieben wurde, jedoch wäre der Kontakt zwischen den Stegen, wie 40, und der Wand 75 nicht so vollständig, wie dies bei der Konfiguration der Fall ist, die in den Figuren 1 bis 5 dargestellt ist. Die Sicherheitsmutter der Figuren 16 bis 20 wird unter Verwendung eines Schlüssels, wie des Schlüssels 53 (Fig. 21) gelöst, der für komplementär passenden Eingriff an der krummlinigen Nut 82 sorgt.

Das Werkzeug 34 kann nicht dazu verwendet werden, die Sicherheits-Befestigungseinrichtungen 10, 60 oder 65 zu lösen, da dann, wenn es in die Vertiefungen 17 oder 71 dieser Befestigungseinrichtungen eingeführt und in Löserichtung verdreht wird, wie in Gegenuhrzeigerrichtung in Fig. 10, die Stege 40 lediglich entlang den Seiten 22 oder 74 gleiten, ohne die Befestigungseinrichtungen zu lösen. Ferner sind der Kopf 12 der Befestigungseinrichtung 10 und der Außenrand der Befestigungseinrichtung 60 ausreichend hart dafür, daß sie nicht leicht mit einem Schlüssel ergriffen werden können. Auch kann der kegelstumpfförmige Rand der Befestigungseinrichtung 65, nicht nur weil er hart ist, sondern auch wegen seiner Form, nicht durch einen herkömmlichen Schlüssel ergriffen werden. Auch dann, wenn ein Werkzeug gegen die Seitenwände 22 der Befestigungseinrichtungen 10 und 60 oder die Seitenwand 74 der Befestigungseinrichtung 65 gedrückt wird, um zu versuchen, diese Befestigungseinrichtung in der lösenden Gegenuhrzeigerrichtung zu verdrehen, rutschen diese lediglich an den Seitenwänden entlang, ohne die Befestigungseinrichtung zu verdrehen.

Die in Fig. 23 dargestellte Sicherheitsschraube 10.2 entspricht erfindungsgemäß prinzipiell der Schraube 10.

Auch sie besitzt einen Schaft 11, der in üblicher Weise mit einem Außengewinde versehen ist. Der die Längsachse 31 aufweisende Schaft 11 ist auf seinem freien Ende mit einem Schraubenkopf 12 versehen.

In der freien Stirnwand 16 des Schraubenkopfes 12 ist eine mäanderförmig umlaufende Nut 59 vorhanden. Die umfangsmäßig umlaufende, mäanderförmig sich hin und her windende Bogenform der Nut 59 ist individuell ausgebildet. Von der Nut 59 wird ein ebenflächiger Zentralbereich 124 der Stirnwand 16 eingerabmt.

Die Stirnwand 16 ist Teil eines kreisförmigen Zylinders. Dessen Mantelfläche 15 besitzt einen in seinen ungeschwächten Bereichen kreisförmigen Querschnitt. Die Mantelfläche 15 stößt auf eine ringförmig umlaufende Schulter 126, die einen sich nach - in Fig. 23 - unten, von der Stirnwand 16 weg, konisch sich verjüngenden Querschnittsbereich (Bund 13) begrenzt. Im Anschluß an den Bund 13 schließt sich dann der bereits erwähnte Schaft 11 an.

In der Mantelfläche 15 sind - wie bei der Schraube 10 - drei Vertiefungen 17 vorhanden. Diese Vertiefungen 17 stellen vertiefte Mantelfächenbereiche dar. In der seitlichen Ansicht weist die Vertiefung 17 die Fläche eines rechtwinkligen Dreiecks aus. Die eine, kürzere Kathete 132 verläuft in etwa parallel zur Längsachse 31 von der Stirnwand 16 weg. Die zweite Kathete 134 verläuft in der Stirnwand 16 in einem zum Umkreis 136 konzentrischen Bogen. Die Hypotenuse 138 verbindet die Kathete 132 mit der Kathete 134 und verläuft schräg in der Mantelfläche 15.

Die Schraube 10.2 läßt sich mit einem Dreh-Werkzeug 34.2 sowohl in Einschraub-Richtung (Pfeil 160) als auch in Ausschraub-Richtung verdrehen.

Das Werkzeug 34.2 besitzt einen an seiner freien, unteren Stirnfläche 142 sich anschließenden ersten Querschnittsbereich 146. Dieser Querschnittsbereich 146 besitzt im vorliegenden Fall drei sich parallel zur Längsachse 43 erstreckende Stege 40. Der zwischen den Stegen befindliche Querschnittsbereich des Werkzeuges 34.2 ist kreiszylinderförmig. Diese Kreiszylinderform ist längs der Stege 40 und damit längs des ersten Querschnittsbereiches 146 vorhanden.

In dem sich an den ersten Querschnittsbereich 146 anschließenden zweiten Querschnittsbereich 150, der tiefer in dem Werkzeug 34.2 und damit weiter von der Stirnfläche 142 als der erste Querschnittsbereich 146 vorhanden ist, besitzt das Werkzeug 34.2 eine Innenfläche, die sich aus sechs gleichen ebenen Flächen 152 zusammensetzt. Diese Flächen 152 umschließen querschnittsmäßig ein regelmäßiges Sechseck, so daß entsprechend geformte, im Stand der Technik bekannte Schraubenköpfe zur inneren Anlage an diese Flächen 152 gebracht werden können. Mit Hilfe dieser Flächen 152 können also Sechseck-Schraubenköpfe in beiden Drehrichtungen geschraubt werden.

Die Stege 40 sind so angeordnet, daß sie etwa in der Mitte von Flächen 152 positioniert sind. Dadurch verjüngen die Stege 40 nicht den durch die Flächen 152 eingerahmten inneren Bereich des Werkzeuges 34.2.

Die Stege 40 dienen zum Einschrauben der Schraube 10.2. Dazu wird das Werkzeug 34.2 auf den Schraubenkopf 12 aufgesetzt. Das Werkzeug 34.2 wird dabei so angesetzt werden, daß sich die Stege 40 im Bereich der Kathete 134 von jeder Vertiefung 17 befinden. Im übrigen Bereich des Umkreises 136 stoßen die Stege 40 an die Stirnwand 16 an. Die Stege 40 greifen also in die Vertiefungen 17 hinein. Beim Drehen in Einschraub-Richtung 160 legen sie sich an die durch die Kathete 132 begrenzte vertiefte Anlagefläche 154 drückend an. Durch Drehen des Werkzeuges 43.2 kann dadurch mit Hilfe dieser Stege 40 die Schraube 10.2 entsprechend mitgedreht werden.

In Gegenrichtung, in Ausschraub-Richtung, löst sich die Anlage zwischen den Stegen 40 und der Anlagefläche 154 von jeder Vertiefung 17. Die Stege 40 stoßen dann an die Hypotenuse 138 mit der Folge, daß das Werkzeug 34.2 rückwärts wieder von der Schraube 10.2 - in den Figuren 23, 24 - nach oben wegbewegt wird.

Das Einschrauben der Schraube 10.2 kann dadurch mit dem Werkzeug 34.2 bewirkt werden. Eine der Nut 59 angepaßte Drehhilfe ist dazu nicht erforderlich. Zum Lösen der Schraube 10.2 muß dagegen eine in die Nut 59 passende Drehhilfe verwendet werden. Die Vertiefungen 17 können nämlich zum Ausschrauben nicht verwendet werden.

## Patentansprüche

1. Sicherheits-Befestigungseinrichtung (10, 60, 65) mit
- einem Körper (14);
- einer Mantelfläche (15) am Körper; und
- einer Stirnwand (16), die sich quer zur Mantelfläche erstreckt;
- einer Schlüsselaufnahmekonfiguration (59) in der Stirnwand (16) zum Ein- und Ausschrauben der Sicherheits-Befestigungseinrichtung mittels eines als Schraubendreher oder Schraubenschlüssel dienenden Werkzeuges (34),
**gekennzeichnet durch**
- zumindest eine Schlüsselaufnahmevertiefung (17) in der Mantelfläche (15).

2. Befestigungseinrichtung nach einem der vorstehenden Ansprüche,
**dadurch gekennzeichnet,** daß
- die Schlüsselaufnahmekonfiguration eine krummlinige Nut (59) ist.

3. Befestigungseinrichtung nach einem der vorstehenden Ansprüche,
**dadurch gekennzeichnet,** daß
- in der Mantelfläche (15) zumindest eine Vertiefung (17) vorhanden ist,
- die Vertiefung (17) zumindest einen für ein Werkzeug (34) in Einschraub-Richtung (160) abrutschsicheren Anschlag (23, 154) besitzt, so daß durch das Werkzeug ein Drehmoment auf die Sicherheits-Befestigungseinrichtung (10, 60, 65) übertragbar ist,
- diese Vertiefung (17) für das Werkzeug (34) in Ausschraub-Richtung so geformt ist, daß durch das Werkzeug (34) kein wirksames Drehmoment auf die Sicherheits-Befestigungseinrichtung (10, 60, 65) übertragbar ist.

4. Befestigungseinrichtung nach einem der vorstehenden Ansprüche,
**dadurch gekennzeichnet,** daß
- mehrere voneinander beabstandete Vertiefungen (17) von einer Bodenwand (21) und einer ersten und zweiten Seitenwand (22, 23), die sich ausgehend von der Stirnwand (16) nach innen erstrecken, begrenzt sind, und die erste und die zweite Seitenwand (22, 23) benachbarte Abschnitte entfernt von der Stirnwand aufweisen.

5. Befestigungseinrichtung nach Anspruch 4,
**gekennzeichnet durch**
- Übergänge mit Radien zwischen der Bodenwand (21) und der ersten und zweiten Seitenwand (22, 23).

6. Befestigungseinrichtung nach einem der vorstehenden Ansprüche,
**dadurch gekennzeichnet,** daß
- die Vertiefungen (17) über ihre Ausdehnung im wesentlichen gleichmäßige Tiefe aufweisen.

7. Befestigungseinrichtung nach einem der vorstehenden Ansprüche,
**dadurch gekennzeichnet,** daß
- sich die Vertiefungen (17) ausgehend von der Stirnwand (16) nach innen in die Mantelfläche (15) erstrecken.

8. Befestigungseinrichtung nach einem der vorstehenden Ansprüche,
**dadurch gekennzeichnet,** daß
- jede der Vertiefungen (17) durch eine erste und eine zweite Seitenwand (22, 23) und eine Bodenwand (21) gebildet ist, wobei jede erste Seitenwand ein erstes Ende benachbart zur Stirnwand (16) und ein zweites Ende aufweist, das einwärts entlang der Mantelfläche (15) bezogen auf die Stirnwand liegt, wobei jede der zweiten Seitenwände ein erstes Ende benachbart zum zweiten Ende der ersten Wand und ein zweites Ende benachbart zur Stirnwand aufweist, und wobei die erste Seitenwand unter einem größeren Winkel zur Achse des Körpers (14) als die zweite Seitenwand geneigt ist und sich jede der Vertiefungen an der Innenumfangswand ausgehend von der Stirnwand nach innen ersreckt und über ihr gesamtes Ausmaß im wesentlichen gleichmäßige Tiefe aufweist.

9. Befestigungseinrichtung nach Anspruch 8,
**dadurch gekennzeichnet,** daß
- sich die zweite Wand (23) im wesentlichen parallel zur Achse des Körpers (14) erstreckt.

10. Befestigungseinrichtung nach einem der vorstehenden Ansprüche,
**gekennzeichnet durch**
- eine Fase (20) am Körper (14) zwischen der Stirnwand (16) und der Mantelfläche (15).

11. Befestigungseinrichtung nach Anspruch 8,
**gekennzeichnet durch**
- einen ersten Radius zwischen der ersten Wand (22) und der Bodenwand (21), einen zweiten Radius zwischen der zweiten Wand (23) und der Bodenwand sowie einen dritten Radius zwischen der ersten und der zweiten Wand.

12. Befestigungseinrichtung nach einem der vorstehenden Ansprüche,
**dadurch gekennzeichnet,** daß
- die Bodenwände (21) konkav gekrümmt sind und die Stege (40) für im wesentlichen komplementär passenden Eingriff an den ersten Wänden (22) gekrümmt sind.

13. Werkzeug zum Verdrehen einer Sicherheits-Befestigungseinrichtung nach einem der vorstehenden Ansprüche,
**dadurch gekennzeichnet,** daß
- zumindest eine erste Art von zumindest einer Anschlaggegenfläche (40) vorhanden ist, die der vorhandenen zumindest einen Vertiefung (17) so angepaßt ist, daß ein Drehmoment in Einschraub-Richtung (60) auf die Sicherheits-Befestigungseinrichtung (10, 60, 65) übertragbar ist.

14. Werkzeug nach Anspruch 13,
**gekennzeichnet durch**
- einen Körper (35) mit einer zweiten Wand (39);
- eine Bohrung (37) im Körper (35), die durch die zweite Wand (39) gebildet ist;
- mehreren Stegen (40), die sich ausgehend von der zweiten Wand (39) nach innen in die Bohrung (37) erstrecken, um mit den Bodenwänden (21) der Sicherheits-Befestigungseinrichtung in Eingriff zu treten, wenn sich die Stege (40) in den Vertiefungen (17) befinden, und um an den Außenseiten von herkömmlichen, im Querschnitt mehrseitigen Befestigungseinrichtungen (49) anzugreifen, wenn eine solche Befestigungseinrichtung (49) innerhalb der Bohrung liegt.

15. Werkzeug nach Anspruch 13,
**dadurch gekennzeichnet,** daß
- eine zweite Art von Anschlaggegenflächen (152) vorhanden ist,
- diese zweite Art von Anschlaggegenflächen (152) längs der Drehachse (43) des Werkzeuges (34.2) versetzt zu der ersten Art von Anschlaggegenflächen (40) vorhanden ist und bei einer zweiten Art von Schraubteilen (49) zur Drehmomentübertragung verwendbar ist.

16. Werkzeug nach Anspruch 15,
**dadurch gekennzeichnet,** daß
- die zweite Art von Schraubteilen (49) eine Mantelfläche besitzen, die aus mehreren gleichen ebenen Seiten (52) zusammengesetzt ist,
- die Anschlaggegenfläche (152) dieser Mantelfläche so angepaßt ist, daß ein Drehmoment in Einschraub- und Ausschraub-Richtung jeweils übertragbar ist.
